(19) Europäisches Patentamt
European Patent Office
Office européen des brevets

(11) **EP 3 845 873 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **19220146.5**

(22) Anmeldetag: **30.12.2019**

(51) Internationale Patentklassifikation (IPC):
**G01G 3/14** (1968.09)   **G01G 19/42** (1968.09)
**G01G 19/52** (1968.09)

(52) Gemeinsame Patentklassifikation (CPC):
**G01G 19/42; G01G 3/14; G01G 19/52**

(54) **REGALKONSOLE**

SHELF BRACKET

CONSOLE D'ÉTAGÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.07.2021 Patentblatt 2021/27**

(73) Patentinhaber: **Bizerba SE & Co. KG**
**72336 Balingen (DE)**

(72) Erfinder:
• **FRITSCH, Andreas**
**72336 Balingen (DE)**
• **METZGER, Frank**
**72461 Albstadt (DE)**

• **WITTE, Harald**
**72336 Balingen (DE)**
• **KALLMANN, Luca**
**78669 Wellendingen (DE)**

(74) Vertreter: **Huber, Meik**
**Bizerba SE & Co. KG**
**PF 18/1**
**Wilhelm-Kraut-Straße 65**
**72336 Balingen (DE)**

(56) Entgegenhaltungen:
WO-A1-2019/220400    CN-A- 110 169 685
US-B1- 10 121 121

**Beschreibung**

Die vorliegende Erfindung betrifft eine Regalkonsole mit mindestens einer Wägevorrichtung. Die Regalkonsole ist geeignet zum befestigt werden in einer vertikal angeordneten Regalschiene. Dafür weist die Regalkonsole eine Verankerungsvorrichtung auf. Die Regalkonsole umfasst einen Ausleger zum Tragen eines Regalfachbodens. Im Zustand, in dem die Regalkonsole in einer Regalschiene befestigt ist, steht der Ausleger in einer im Wesentlichen horizontalen Richtung von der Regalschiene ab.

Die EP1319173B1 zeigt ein Regal eines Kleinteillagers, bei dem eine Bestimmung des Gegenstandes der entnommen wird automatisiert erfolgt. Das Regal umfasst eine Wägeeinheit. Die technische Lehre des Patents befasst sich mit der Berechnung des genauen Ortes der Entnahme eines Gegenstandes in Abhängigkeit des durch die Waage gemessenen Gewichts. Dabei ist die konkrete Implementierung der Wägezelle in dem Regal unberücksichtigt gelassen.

Die WO2019/220400A1 zeigt ein Regal, welches mehrere Planar-Wägezellen umfasst, die einem Regalfachboden zugeordnet sind. Mit Hilfe der Planar-Wägezellen wird das aktuelle Gewicht eines Regalfachbodens und von entnommenen oder hinzugefügten Gegenständen bestimmt.

Die US10121121B1 zeigt ein Regal, welches Informationen zu entnommenen und hinzugefügten Gegenständen auf einem Regalfachboden ermittelt.

Die CN110169685A zeigt ein Regal, welches eine Wägeeinheit umfasst. Unter Berücksichtigung des Gewichts wird ein aus dem Regal entnommener Gegenstand bestimmt.

Aufgabe der Erfindung ist es, eine Regalkonsole und ein Regal mit integrierter Wägefunktionalität zu schaffen.

Diese Aufgabe wird durch eine Regalkonsole nach Anspruch 1, ein Verfahren zur Herstellung einer Regalkonsole nach Anspruch 12 oder ein Regal nach Anspruch 15 gelöst.

Erfindungsgemäß wird eine Regalkonsole mit mindestens einer Wägevorrichtung vorgeschlagen. Die Regalkonsole ist geeignet zum befestigt werden in einer vertikal angeordneten Regalschiene. Dazu umfasst die Regalkonsole eine Verankerungsvorrichtung. Die Regalkonsole umfasst ferner einen Ausleger zum Tragen eines Regalfachbodens. In einem Zustand, in dem die Regalkonsole in einer Regalschiene befestigt ist, steht der Ausleger in einer im Wesentlichen horizontalen Richtung von der Regalschiene ab. In einer Ausführungsform ist der Ausleger durch ein vertikal angeordnetes Blech gebildet. In einem kartesischen Koordinatensystem definiert die Ausdehnung des Auslegers in der horizontalen Ebene eine Y-Richtung, die vertikale Richtung definiert eine Z-Richtung und die senkrecht zur Y-Richtung und Z-Richtung stehende Richtung definiert eine X-Richtung. Die mindestens eine Wägevorrichtung weist einen Krafteinleitungsabschnitt, einen Gelenkabschnitt und einen Kraftaufnahmeabschnitt auf. Der Gelenkabschnitt besteht aus zwei horizontal und parallel zueinander verlaufenden Wiegeblechen. Der Kraftaufnahmeabschnitt und der Krafteinleitungsabschnitt bestehen zumindest teilweise aus vertikal verlaufenden Blechen. In einer Ausführungsform sind der Kraftaufnahmeabschnitt, der Gelenkabschnitt und der Krafteinleitungsabschnitt einstückig ausgebildet.

In einer Ausführungsform verläuft das vertikale Blech des Krafteinleitungsabschnitts und/oder des Kraftaufnahmeabschnitts in X-Richtung seitlich neben den Wiegeblechen. In anderen Worten heißt das, in einer Ansicht von oben auf die Regalkonsole verläuft der Krafteinleitungsabschnitt und/oder der Kraftaufnahmeabschnitt seitlich der Wiegebleche. Da Krafteinleitungsabschnitt, Gelenkabschnitt bestehend aus den Wiegeblechen und Kraftaufnahmeabschnitt mechanisch verbunden und insbesondere einstückig ausgebildet sind, gibt es eine mechanische Verbindung zwischen Krafteinleitungsabschnitt und Kraftaufnahmeabschnitt. In einer Ausführungsform ist die Position "in X-Richtung seitlich neben den Wiegeblechen" dadurch realisiert und so zu verstehen, dass bei einem Blech, das den Krafteinleitungsabschnitt, den Gelenkabschnitt mit den Wiegeblechen und den Kraftaufnahmeabschnitt in einer Ebene umfasst, die Wiegebleche um 90° umgebogen werden.

In einer Ausführungsform umfasst der Krafteinleitungsabschnitt ein Aufnahmeelement für eine Strebe eines Regalfachbodens. Das Aufnahmeelement befindet sich in Z-Richtung über der Position des Gelenkabschnitts. Das heißt, die Z-Koordinaten des Aufnahmeelements sind größer als die Z-Koordinaten des Gelenkabschnitts. Dabei ist es unerheblich, welche X-Koordinaten und Y-Koordinaten Aufnahmeelement und Gelenkabschnitt aufweisen. In einer Ausführungsform weist das Aufnahmeelement einen von oben in vertikaler Richtung orientierten Einschnitt zum Einführen einer Strebe eines Regalfachbodens auf. Das Aufnahmeelement ist dazu ausgebildet eine Strebe des Regalfachbodens abzustützen. In einer Ausführungsform wird die Strebe momentenfrei abgestützt.

In einer Ausführungsform umfasst der Krafteinleitungsabschnitt ein Stabilisierungselement. In einer Ausführungsform ist das Stabilisierungselement als ein in X-Z-Richtung orientiertes Blech ausgebildet. In einer Ausführungsform ist das Stabilisierungselement einstückig mit dem Krafteinleitungsabschnitt ausgebildet.

In einer Ausführungsform ist die Dicke des Bleches des Kraftaufnahmeabschnitts, des Gelenkabschnitts und des Krafteinleitungsabschnitts gleich. In einer Ausführungsform ist das Blech zwischen 1,5 mm und 6 mm dick. In einer Ausführungsform ist das Blech zwischen 2 mm und 3 mm dick.

In einer Ausführungsform sind die zwei Wiegebleche in Z-Richtung übereinander angeordnet. Oberseitig am oberen Wiegeblech sind zwei Dehnungsmessstreifen angebracht. Unterseitig am unteren Wiegeblech sind zwei Dehnungsmessstreifen angebracht. Die vier Dehnungsmessstreifen der Wägevorrichtung sind zu einer Wheatstoneschen Messbrücke verschaltet. In einer Ausführungsform sind die Verschaltung der zwei oberseitig auf dem oberen Wiegeblech angeordneten Dehnungsmessstreifen und die zwei oberseitig auf dem oberen Wiegeblech angeordneten Dehnungsmessstreifen auf einer Dehnungsmessstreifenfolie angebracht. In einer Ausführungsform sind die Verschaltung der zwei unterseitig am unteren Wiegeblech angeordneten Dehnungsmessstreifen und die zwei unterseitig am unteren Wiegeblech angeordneten Dehnungsmessstreifen auf einer Dehnungsmessstreifenfolie angebracht.

In einer Ausführungsform sind die zwei Wiegebleche in Z-Richtung übereinander angeordnet. Oberseitig am oberen Wiegeblech sind vier Dehnungsmessstreifen angebracht. Jeweils zwei der vier Dehnungsmessstreifen sind in X-Richtung nebeneinander auf dem oberen Wiegeblech angeordnet. Die vier Dehnungsmessstreifen der Wägevorrichtung sind zu einer Wheatstoneschen Messbrücke verschaltet. In einer Ausführungsform sind die Verschaltung der vier Dehnungsmessstreifen und die vier Dehnungsmessstreifen auf einer Dehnungsmessstreifenfolie angebracht.

In einer Ausführungsform ist der Abstand der beiden Wiegebleche in Z-Richtung zwischen 10 mm und 40 mm, insbesondere zwischen 20 mm und 25 mm.

In einer Ausführungsform ist die Breite der Wiegebleche in X-Richtung im Bereich der Mitte des Gelenkabschnitts am schmalsten. Dies ist nicht so zu verstehen, dass die schmalste Stelle der Wiegebleche exakt in der Mitte der Wiegebleche ist. Vielmehr ist damit gemeint, dass vom mechanischen Kontakt eines Wiegeblechs mit dem Krafteinleitungsabschnitt ausgehend die Breite des Wiegebleches abnimmt und dann hin zum mechanischen Kontakt mit dem Kraftaufnahmeabschnitt die Breite des Wiegebleches wieder zunimmt. Vorteilhafterweise ist die schmalste Stelle leicht außermittig des Wiegebleches. In einer Ausführungsform sind die Kontur der Breite des oberen Wiegeblechs und die Kontur der Breite des unteren Wiegeblechs ähnlich aber nicht exakt gleich. Die Dicke des oberen Wiegeblechs und die Dicke des untern Wiegeblechs in Z-Richtung ist jedoch gleich. Mit der Kontur der Breite der Wiegebleche wird das Flächenträgheitsmoment der Wiegebleche eingestellt, um im Bereich der Dehnungsmessstreifen ein konstantes Flächenträgheitsmoment und somit beste Wiegeergebnisse zu erhalten.

In einer Ausführungsform sind die Wiegebleche an der breitesten Stelle zwischen 5 mm und 20 mm, insbesondere zwischen 7 mm und 10 mm breit. In einer Ausführungsform ist die Breite der Wiegebleche an der schmalsten Stelle zwischen 50 % und 80 % der Breite der Wiegebleche an der breitesten Stelle.

In einer Ausführungsform umfasst die Wägevorrichtung einen Überlastanschlag, der durch die Höhe eines Spaltes zwischen Ausleger und Krafteinleitungsabschnitt definiert ist. In einer Ausführungsform ist ein separat angebrachter Überlastanschlag vorgesehen.

In einer Ausführungsform umfasst die Regalkonsole zwei Wägevorrichtungen. Dabei sind der Ausleger und die beiden Wägevorrichtungen einstückig ausgebildet. In einer Ausführungsform ist auch die Verankerungsvorrichtung einstückig mit dem Ausleger ausgebildet. Das heißt, Ausleger, Verankerungsvorrichtung und beide Wägevorrichtungen sind aus einem Blech gebildet. Das schließt nicht aus, dass in einer Ausführungsform eine separate Abdeckung für jede Wägevorrichtung und/oder eine separate Abdeckung für den Innenbereich der Regalkonsole am Ausleger angebracht, insbesondere verschraubt, angeschweißt oder vernietet ist, die die Wägevorrichtung von außen bzw. innen abdeckt.

In einer Ausführungsform sind zwei Wägevorrichtungen separat ausgebildet und an den Ausleger angeschraubt oder angeschweißt. Der Kraftaufnahmeabschnitt ist in diesem Fall in vertikaler Richtung abgekantet um einen seitlichen Versatz einer Befestigungsvorrichtung zu ermöglichen. So wird eine Versteifungsrippe gebildet. Die Befestigungsvorrichtung ist nochmals von der Versteifungsrippe abgekantet, so dass die Befestigungsvorrichtung parallel zum Krafteinleitungsabschnitt und Kraftaufnahmeabschnitt ausgebildet ist.

Erfindungsgemäß wird ein Verfahren zur Herstellung einer Wägevorrichtung für eine Regalkonsole vorgeschlagen. Dabei wird mit einem Metallbearbeitungslaser ein Rohling mindestens einer Wägevorrichtung aus einem Blech ausgeschnitten. Der Rohling wird mit einem Biegewerkzeug gebogen, so dass mindestens ein Stabilisierungselement und insbesondere Versteifungsrippen entstehen. Der Rohling wird mit einem Biegewerkzeug gebogen, so dass ein oberes Wiegeblech und ein unteres Wiegeblech entstehen. Eine Dehnungsmessstreifenfolie mit mindestens zwei Dehnungsmessstreifen wird auf das obere Wiegeblech appliziert. In einer Ausführungsform wird eine Dehnungsmessstreifenfolie mit mindestens zwei Dehnungsmessstreifen auf das obere Wiegeblech und eine Dehnungsmessstreifenfolie mit mindestens zwei Dehnungsmessstreifen unter das untere Wiegeblech appliziert. Die Dehnungsmessstreifenfolie wird mit mindestens einer Leiterplatte mit darauf angeordneter Elektronik, insbesondere einem Analog-Digital-Wandler zur Verarbeitung wenigstens eines Ausgangssignals der zumindest einen Dehnungsmessstreifenfolie, verbunden.

In einer Ausführungsform umfasst der Schritt des Ausschneidens mit einem Metallbearbeitungslaser eines Rohlings mindestens einer Wägevorrichtung aus einem Blech den Schritt des Ausschneidens eines Rohlings für zwei Wägevorrichtungen und einen Ausleger aus einem Blech.

In einer Ausführungsform wird durch Biegen der Versteifungsrippen mit einem Biegewerkzeug eine Befestigungsseite an der Versteifungsrippe erstellt. Es werden mit einer Bohrvorrichtung Befestigungslöcher in die Befestigungsseiten gebohrt und es werden Befestigungslöcher in einen Ausleger der Regalkonsole gebohrt. Die Wägevorrichtung wird mit dem Ausleger der Regalkonsole mittels der Befestigungslöcher und Schrauben verbunden.

Die Erfindung betrifft auch ein Regal bestehend aus mindestens zwei vertikal angeordneten Regalschienen und mindestens zwei auf gleicher Höhe in jeweils einer Regalschiene angeordneten erfindungsgemäßen Regalkonsolen.

Das Regal umfasst weiter mindestens einen auf den zwei auf gleicher Höhe angeordneten Regalkonsolen aufgelegten Regalfachboden. Der Regalfachboden umfasst zwei parallel ausgebildete Streben, die mit ihren Enden auf den Krafteinleitungsabschnitten von jeweils zwei Wägevorrichtungen abgestützt sind. Das Regal umfasst eine Auswerteeinheit, die in periodischen Abständen oder bei einer Änderung des Gesamtgewichts, welches von den vier Wägevorrichtungen, auf deren Krafteinleitungsabschnitten der Regalfachboden aufliegt, erfasst wird, aus den Daten der Wägevorrichtungen neue Schwerpunktskoordinaten ermittelt. Diese Schwerpunktskoordinaten werden an eine Steuereinheit übermittelt. Die Steuereinheit ermittelt basierend auf der Änderung der Schwerpunktskoordinaten einen Regalbereich auf dem Regalfachboden. Die Steuereinheit bestimmt aus der Änderung des Gesamtgewichts das Gewicht der in dem ermittelten Regalbereich entnommenen oder zugefügten Waren und aktualisiert den in einem Speicher gespeicherten Warenbestand für diesen Regalbereich.

In einer Ausführungsform ermittelt die Auswerteeinheit bei einer Änderung des Gesamtgewichts einen Vektor zwischen den vorhergehenden Schwerpunktkoordinaten und den neuen Schwerpunktkoordinaten. Der von der Steuereinheit bestimmte Regalbereich wird aus dem Vektor und dem Gesamtgewicht von der Steuereinheit ermittelt.

In einer Ausführungsform tariert die Auswerteeinheit alle Wägevorrichtungen periodisch und gleichzeitig. Die aus den Daten der Wägevorrichtungen gebildeten Schwerpunktskoordinaten bilden den Schwerpunkt ab, an dem etwas aus dem Regalfachboden entnommen oder zugefügt wurde. In einer Ausführungsform bildet die Auswerteeinheit zur Ermittlung der neuen Schwerpunktskoordinaten für jede Wägevorrichtung die Differenz aus einem neuen Gewichtswert und einem vorhergehenden Gewichtswert. Das heißt, bei einer Entnahme oder einem Hinzufügen eines Produkts auf den Regalfachboden wird die Gewichtsänderung an jeder Wägevorrichtung separat ermittelt. Aus den vier Differenzwerten, das heißt, aus der Gewichtsänderung an jeder Wägevorrichtung, werden die neuen Schwerpunktskoordinaten ermittelt. Beide Ausführungsformen führen dazu, dass die gemessenen Gewichtswerte der vier Wägevorrichtungen separat betrachtet werden und nicht ein Vektor berechnet wird, der skaliert werden muss. Somit sind diese beiden Ausführungsformen weniger sensitiv gegenüber Toleranzen bei der Gewichtswertbestimmung durch die Wägevorrichtungen.

Einige Ausführungsformen der Erfindung sind in den Zeichnungen beispielhaft gezeigt und nachfolgend beschrieben. Es zeigen, jeweils in schematischer Darstellung:

Fig. 1 eine erfindungsgemäße Regalkonsole mit zwei Wägevorrichtungen in einer Ansicht auf die Innenseite,

Fig. 2 eine Regalkonsole mit zwei Wägevorrichtungen in einer Ansicht auf die Außenseite,

Fig. 3 eine Regalkonsole mit zwei Wägevorrichtungen mit einer Schutzabdeckung in einer Ansicht auf die Außenseite,

Fig. 4 eine Regalkonsole mit zwei Wägevorrichtungen in einer isometrischen Ansicht,

Fig. 5 ein Ausschnitt eines Rohlings für eine Regalkonsole nach dem Bearbeiten mit einem Metallbearbeitungslaser,

Fig. 6 ein Ausschnitt einer Regalkonsole mit einer Wägevorrichtung,

Fig. 7 eine Wägevorrichtung nach einer zweiten Ausführungsform,

Fig. 8 ein Ausschnitt einer Regalkonsole mit einer Wägevorrichtung mit zwei Dehnungsmessstreifen,

Fig. 9 ein Ausschnitt einer Regalkonsole mit einer Wägevorrichtung mit vier Dehnungsmessstreifen,

Fig. 10 ein Verfahren zur Herstellung einer Regalkonsole,

Fig. 11 einen Regalfachboden,

Fig. 12 eine Explosionszeichnung einer Wägevorrichtung und einer Strebe eines Regalfachbodens,

Fig. 13 ein Blockdiagramm eines Regals,

Fig. 14 ein Verfahren zum Betrieb eines Regals,

Fig. 15 ein erstes Verfahren zur Bestimmung eines Ortes auf dem Regalfachboden, an dem ein Produkt entnommen oder zugefügt wurde,

Fig. 16     ein zweites Verfahren zur Bestimmung eines Ortes auf dem Regalfachboden, an dem ein Produkt entnommen oder zugefügt wurde, und

Fig. 17     ein drittes Verfahren zur Bestimmung eines Ortes auf dem Regalfachboden, an dem ein Produkt entnommen oder zugefügt wurde.

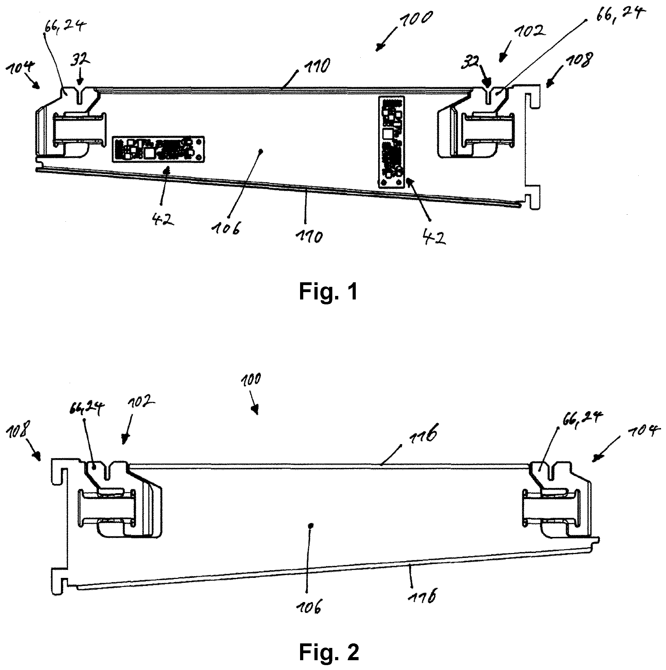

Fig. 1 zeigt eine Regalkonsole 100 in einer Seitenansicht auf die Innenseite, die in Fig. 2 in einer Seitenansicht auf die Außenseite dargestellt ist. Die Regalkonsole 100 besteht aus einem sich in horizontaler Richtung erstreckenden Ausleger 106, der aus einem vertikal angeordneten Blech gebildet ist. Um die Stabilität zu erhöhen, weist der Ausleger 106 an seiner Oberseite und an seiner Unterseite eine Versteifungsrippe 110 auf. Die Versteifungsrippe ist realisiert durch eine Biegung 116 des Blechs um 90°. Die Regalkonsole 100 umfasst an einem axialen Ende des Auslegers 106 eine Verankerungsvorrichtung 108 in der Form von zwei Haken, mit der die Regalkonsole in einer Regalschiene befestigt werden kann. Regalschienen sind oft als vertikal angebrachte Schienen mit übereinander angeordneten Schlitzen ausgebildet, so dass die Regalkonsolen auf verschiedenen Höhen an der Regalschiene befestigt werden können. Zwei Regalkonsolen 100, die an zwei beabstandeten Regalschienen auf gleicher Höhe angebracht sind, tragen einen Regalfachboden und bilden so ein Regalfach. Der Ausleger 106 ist dreieckförmig ausgebildet, das heißt, im Bereich der Verankerungsvorrichtung 108 ist die Höhe des Auslegers größer als am gegenüberliegenden axialen Ende, das dem vorderen Bereich des Regalfachs entspricht. Der Ausleger umfasst ferner zwei Wägevorrichtungen 102, 104, wobei eine Wägevorrichtung 102 im Bereich der Verankerungsvorrichtung 108 und eine Wägevorrichtung 104 im Bereich des anderen axialen Endes des Auslegers 106 angebracht ist. Jede Wägevorrichtung 102, 104 umfasst einen Krafteinleitungsabschnitt 24 mit einem Aufnahmeelement 66, das eine Aufnahme 32 aufweist. In die Aufnahme 32 kann eine Strebe eines Regalfachbodens eingebracht werden, so dass die Krafteinleitungsabschnitte 24 der Wägevorrichtungen 102, 104 über die Streben den Regalfachboden stützen und halten. Dabei ist das Aufnahmeelement 66 von oben frei zugänglich, so dass der Regalfachboden ausschließlich über die Krafteinleitungsabschnitte 24 der Wägevorrichtungen 102, 104 gestützt wird. In der Seitenansicht auf die Innenseite der Regalkonsole 100 nach Fig. 1 sind zwei jeweils jeder Wägevorrichtung 102, 104 zugeordnete Leiterplatten 42 mit darauf angeordneter Elektronik, insbesondere eines Analog-Digital-Wandlers zur Verarbeitung wenigstens eines Ausgangssignals eines Dehnungsmessstreifens der Wägevorrichtungen 102, 104, gezeigt.

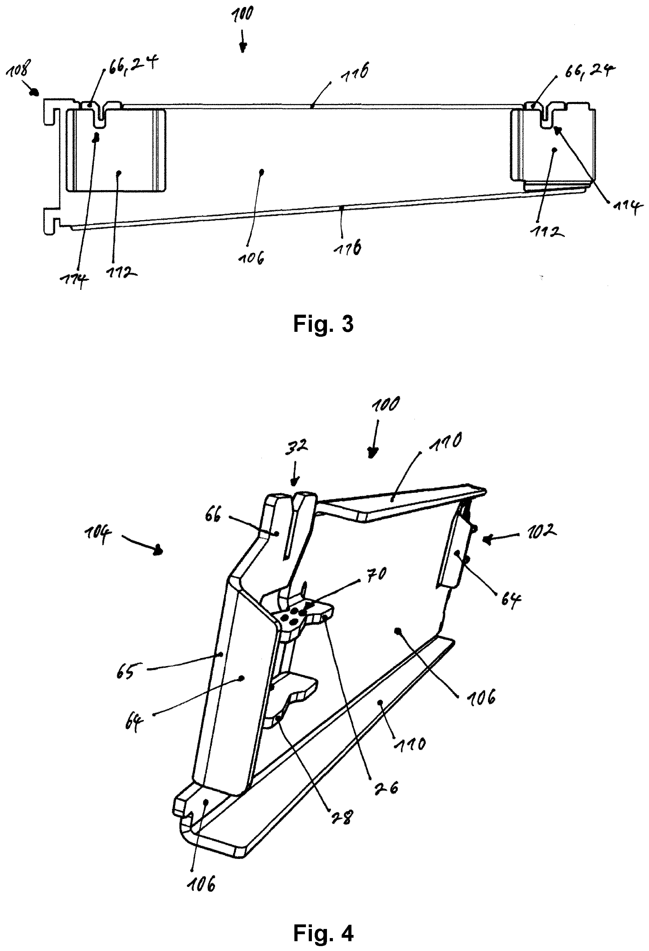

Fig. 3 zeigt eine Ansicht auf die Außenseite der Regalkonsole wie in Fig. 2, wobei die Wägevorrichtungen 102, 104 mit einer Schutzabdeckung 112 gegen mechanische Beschädigung von außen geschützt sind. Die Schutzabdeckung 112 weißt eine Öffnung 114 auf, so dass sichergestellt ist, dass sie die zu wiegende Strebe nicht ungewollt abstützt. Die Schutzabdeckung 112 ist zum Beispiel an den Ausleger 106 der Regalkonsole 100 angeschweißt oder angeschraubt. Die Ansicht wie in Fig. 3 dargestellt zeigt eine Regalkonsole 100 wie sie zur Bildung eines Regals eingesetzt wird, wobei die Ansicht nach Fig. 2 die Wägevorrichtungen 102, 104 detaillierter darstellt.

Fig. 4 zeigt eine isometrische Ansicht einer Regalkonsole 100. Die Wägevorrichtung 104 am vorderen axialen Ende, die im Folgenden detaillierter beschrieben ist, ist einstückig mit dem Ausleger 106 ausgebildet und durch Biegungen des Blechs des Auslegers 106 hergestellt. Die Wägevorrichtung 104 besteht aus einem Krafteinleitungsabschnitt 24, der ein Aufnahmeelement 66 mit einer Aufnahme 32 für eine Strebe eines Regalfachbodens umfasst. Ferner umfasst der Krafteinleitungsabschnitt 24 ein Stabilisierungselement 64, welches einstückig mit dem Krafteinleitungsabschnitt 24 hergestellt ist und durch eine Biegung 65 damit verbunden ist. Ebenfalls Teil der Wägevorrichtung 104 und mit den anderen Teilen einstückig verbunden sind zwei parallel verlaufende Wiegebleche 26, 28, deren Herstellung und Funktion im Folgenden detaillierter beschrieben ist. Das obere Wiegeblech 26 umfasst vier Dehnungsmessstreifen 70 zur Erfassung einer dehnenden oder stauchenden Bewegung des Wiegeblechs 26. Am anderen axialen Ende des Auslegers in Richtung der Verankerungsvorrichtung 108 befindet sich die zweite Wägevorrichtung 102, von der in Fig. 4 nur das Stabilisierungselement 64 deutlich zu sehen ist.

Eine optionale Abdeckung, die an den Versteifungsrippen 110 angebracht werden kann und den inneren Bereich der Regalkonsole 100 schützt, ist in Fig. 1 bis 4 nicht gezeigt.

In Fig. 1 bis 4 ist eine Regalkonsole 100 gezeigt, die von vorne betrachtet die linke Regalkonsole eines Regalfachs bildet. Ebenso muss ein Regalfach eine rechte Regalkonsole umfassen, so dass der Regalfachboden auf der linken Seite von der linken Regalkonsole und auf der rechten Seite von der rechten Regalkonsole getragen wird. Auf die Darstellung der rechten Regalkonsole ist verzichtet. Die rechte Regalkonsole ist spiegelsymmetrisch zur linken Regalkonsole aufgebaut.

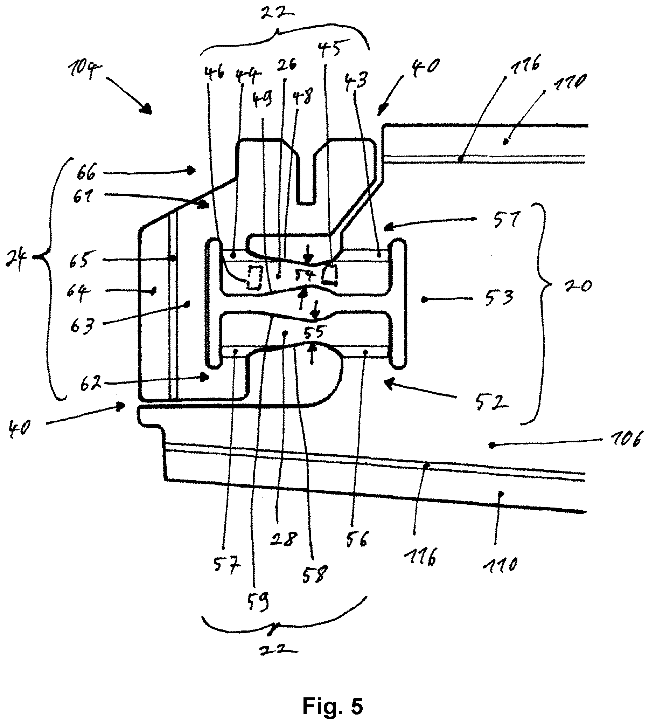

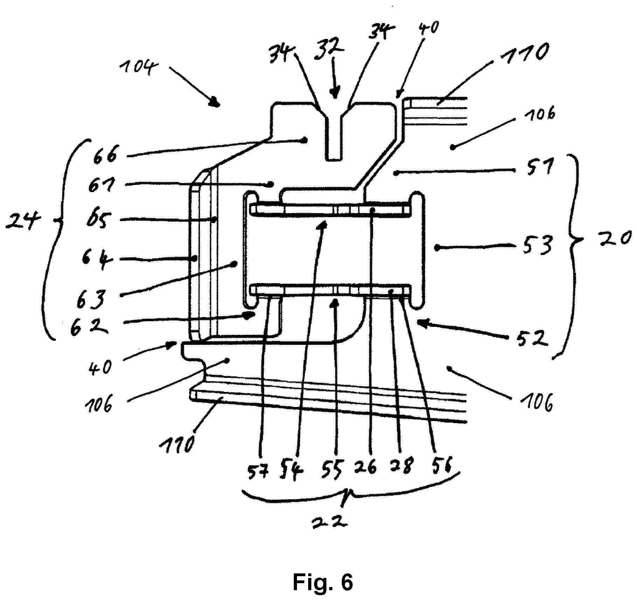

Fig. 5 und 6 zeigen eine Detailansicht einer Wägevorrichtung 104. Dabei ist die Darstellung so gewählt, dass es sich um eine Wägevorrichtung 104 am vorderen axialen Ende des Auslegers 106 handelt. Die Wägevorrichtung 102 am axialen Ende des Auslegers 106, an dem sich die Verankerungsvorrichtung 108 befindet, ist entsprechend aufgebaut. Fig. 5 zeigt einen Rohling für eine Wägevorrichtung 104. Der Rohling ist aus einem Blech gefertigt, das im Bereich von 2,5 mm dick ist. Das Blech wird mittels Metallbearbeitungsverfahren, zum Beispiel mittels eines Metallbearbeitungslaser wie in Fig. 5 gezeigt ausgeschnitten. Durch Abkanten, d. h. umbiegen um 90° der Versteifungsrippen 110, des Stabilisierungselements 64 und der Wiegebleche 26, 28 ergibt sich die Wägevorrichtung 104 wie in Fig. 6 gezeigt. Diese wird anschließend mit Dehnungsmessstreifen bestückt und an Elektronik angeschlossen. Die Wägevorrichtung 104 dient dabei als Verformungskörper und besteht aus einem Krafteinleitungsabschnitt 24, an dem eine vertikal wirkende Kraft über eine momentenfrei gelagerte Strebe des Regalfachbodens eingeleitet wird und einem Kraftaufnahmeabschnitt 20, der mechanisch starr mit dem Ausleger 106 verbunden ist. Im Kraftfluss zwischen Krafteinleitungsabschnitt 24 und Kraftaufnahmeabschnitt 20 angeordnet befindet sich ein Gelenkabschnitt 22. Im Wesentlichen verformt sich der Verformungskörper im Bereich des Gelenkabschnitts 22. Von dessen Verformung kann auf eine auf die Wägevorrichtung 104 wirkende Gewichtskraft rückgeschlossen werden.

Der Gelenkabschnitt 22 umfasst zwei Wiegebleche 26, 28, die aus dem Metallblech wie in Fig. 5 dargestellt ausgeschnitten werden. Durch eine Biegung des oberen Wiegeblechs 26 nach oben und eine Biegung des unteren Wiegeblechs 28 nach unten um jeweils 90° sind die beiden Wiegebleche 26, 28 parallel zueinander und in Z-Richtung übereinander angeordnet (Fig. 6). So ist der axial vordere und der axial hintere Teil jedes Biegeblechs 26, 28 jeweils mit einem Biegeabschnitt 43, 44, 56, 57 verbunden, mittels dessen die Biegung und somit die 90° Richtungsänderung des Blechs erfolgt. Das obere Wiegeblech 26 umfasst auf seiner, nach der Biegung, Oberseite zwei Bereiche 45, 46, in denen jeweils zwei Dehnungsmessstreifen angebracht werden. In dieser Variante befinden sich vier Dehnungsmessstreifen auf dem oberen Wiegeblech 26. In einer Variante, in der sich zwei Dehnungsmessstreifen auf dem oberen Wiegeblech 26 und zwei Dehnungsmessstreifen an dem unteren Wiegeblech 28 befinden, umfasst das untere Wiegeblech 28 auf seiner Unterseite ebenfalls zwei Bereiche, die zum Anbringen der Dehnungsmessstreifen vorgesehen sind, wobei die Bereiche auf dem oberen Wiegeblech 26 jeweils nur für einen Dehnungsmessstreifen vorgesehen sind.

Ein axiales Ende des oberen Wiegeblechs 26 ist über einen Biegeabschnitt 43 mit einem Halter 51 des Kraftaufnahmeabschnitts 20 verbunden. Das andere axiale Ende des oberen Wiegeblechs 26 ist über einen Biegeabschnitt 44 mit einem Halter 61 des Krafteinleitungsabschnitts 24 verbunden. Ein axiales Ende des unteren Wiegeblechs 28 ist über einen Biegeabschnitt 56 mit einem Halter 52 des Kraftaufnahmeabschnitts 20 verbunden. Das andere axiale Ende des unteren Wiegeblechs 28 ist über einen Biegeabschnitt 57 mit einem Halter 62 des Krafteinleitungsabschnitts 24 verbunden. Die Breite 54 des oberen Wiegeblechs 26 und die Breite 55 des unteren Wiegeblechs 28 ist im Bereich der Mitte schmaler als an den axialen Enden. Der Verlauf der Konturen 48, 49 der Breite des oberen Wiegeblechs 26 und der Verlauf der Konturen 58, 59 der Breite des unteren Wiegeblechs 28 sind nicht identisch. Außerdem sind diese Konturen 48, 49, 58, 59 nicht spiegelsymmetrisch zu Mitte. Mit diesen Konturen 48, 49, 58, 59 werden die Flächenträgheitsmomente der Wiegebleche 26, 28 eingestellt, um im Bereich der Dehnungsmessstreifen ein, im Idealfall, konstantes Flächenträgheitsmoment und somit beste Wiegeergebnisse zu erhalten. Die Dicke der Wiegebelche 26, 28 ist überall, auch in diesem Bereich, gleich und entspricht der Dicke des Blechs der anderen Teile der Wägevorrichtungen 102, 104 und des Auslegers 106.

Der Kraftaufnahmeabschnitt 20 umfasst eine Basis 53 und den mit der Basis 53 verbundenen Halter 51, an dem die Biegung 43 des oberen Wiegeblechs 26 des Gelenkabschnitts 22 angebracht ist. Des Weiteren umfasst der Kraftaufnahmeabschnitt 20 den mit der Basis 53 verbundenen Halter 52, an dem die Biegung 56 des unteren Wiegeblechs 28 des Gelenkabschnitts 22 angebracht ist.

Der Krafteinleitungsabschnitt 24 umfasst eine Basis 63 und den mit der Basis 53 verbundenen Halter 61, an dem die Biegung 44 des oberen Wiegeblechs 26 des Gelenkabschnitts 22 angebracht ist. Des Weiteren umfasst der Krafteinleitungsabschnitt 24 den mit der Basis 53 verbundenen Halter 62, an dem die Biegung 57 des unteren Wiegeblechs 28 des Gelenkabschnitts 22 angebracht ist. Um ein Stabilisierungselement 64 gegenüber der Basis 63 des Krafteinleitungsabschnitts 24 abzukanten umfasst der Krafteinleitungsabschnitt 24 in diesem Übergangsbereich eine Biegung 65. Ein in vertikaler Richtung über dem Gelenkabschnitt 22 angeordnetes Aufnahmeelement 66 umfasst einen Einschnitt 32, der zu seinem offenen Ende hin mit Schrägen 34 verbreitert ist. Der Einschnitt 32 dient dazu, eine Strebe eines Regalfachbodens momentenfrei abzustützen.

Alle in Fig. 5 dargestellten Bauteile befinden sich in einer Ebene. Durch das Abkanten des oberen Wiegeblechs 26, des unteren Wiegeblechs 28, des Stabilisierungselements 64 und der Versteifungsrippen 110 sind in den Wägevorrichtungen 102, 104 diese Teile senkrecht zur Ebene der anderen Teile ausgerichtet. Das führt auch dazu, dass das Aufnahmeelement 66 in horizontaler Richtung, insbesondere in X-Richtung, seitlich von dem oberen Wiegeblech 26 und dem unteren Wiegeblech 28 liegt.

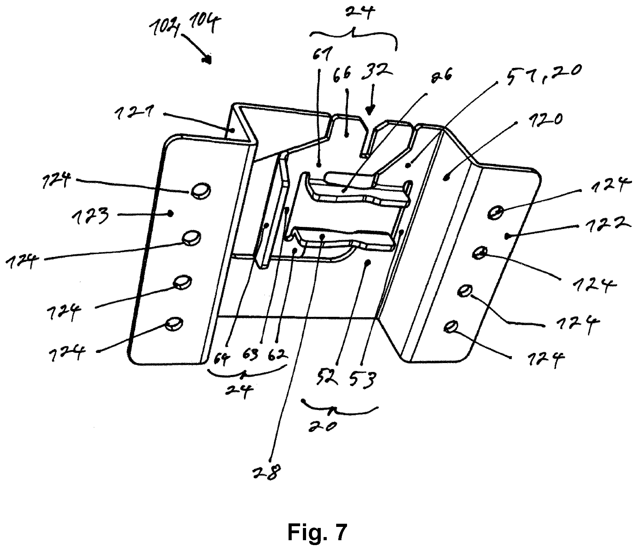

Fig. 7 zeigt eine Wägevorrichtung 102, 104 wie in Fig. 6, wobei sie nicht in den Ausleger integriert ist. Gleiche Teile wie in Fig. 6 sind nicht mehr separat beschrieben. Die Wägevorrichtung 102, 104 ist an vertikal verlaufenden Versteifungsrippen 120, 121 mit ihrem Kraftaufnahmeabschnitt 20 befestigt. Senkrecht nach außen abgekantet sind von den Versteifungsrippen 120, 121 zwei Befestigungsbleche 122, 123 mit Befestigungslöchern 124. Somit kann eine Wägevorrichtung wie beschrieben als separate Wägevorrichtung ausgebildet sein und zum Beispiel an eine Wand angeschraubt sein, um mit ihrem Aufnahmeelement eine Strebe eines Regalfachbodens oder im Allgemeinen einen zu wiegenden Gegenstand abzustützen.

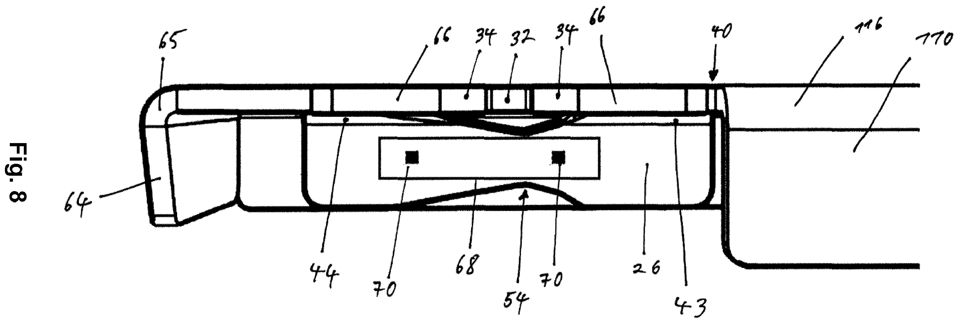

Fig. 8 zeigt eine Wägevorrichtung 104 von oben. Auf dem oberen Wiegeblech 26 ist eine Dehnungsmessstreifenfolie 68 angebracht, die zwei Dehnungsmessstreifen 70 umfasst, die in den dafür vorgesehenen Bereichen 45, 46 auf dem oberen Wiegeblech 26 eine dehnende und/oder stauchende Verformung messen. In diesem Fall sind auf der Unterseite des unteren Wiegeblechs 28 ebenfalls zwei Dehnungsmessstreifen mit einer Dehnungsmessstreifenfolie angebracht, die jedoch in Fig. 8 nicht zu sehen sind. Diese vier Dehnungsmessstreifen 70 werden zu einer Wheatstoneschen Messbrücke (Brückenschaltung) verschaltet und über die Leiterplatte 42 ausgewertet.

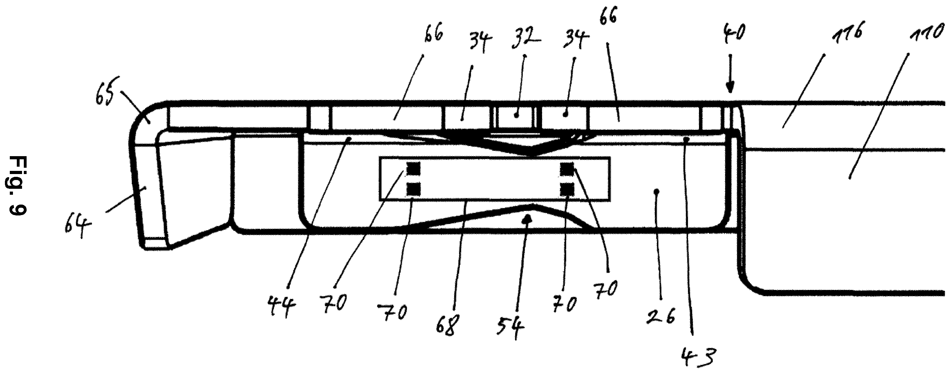

Fig. 9 zeigt eine Wägevorrichtung 104 von oben. Auf dem oberen Wiegeblech 26 ist eine Dehnungsmessstreifenfolie 68 angebracht, die vier Dehnungsmessstreifen 70 umfasst, die in den dafür vorgesehenen Bereichen 45, 46 auf dem oberen Wiegeblech 26 eine dehnende und/oder stauchende Verformung messen. Jeweils zwei Dehnungsmessstreifen 70 sind in einem Bereich 45, 46, der für das Anbringen von Dehnungsmessstreifen 70 vorgesehen ist, nebeneinander angebracht. Die vier Dehnungsmessstreifen 70 werden zu einer Wheatstoneschen Messbrücke (Brückenschaltung) verschaltet und über die Leiterplatte 42 ausgewertet.

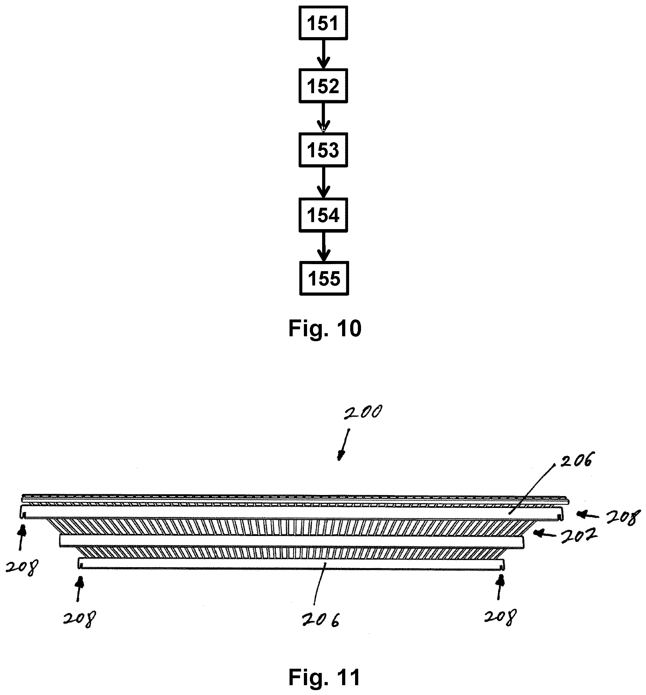

Fig. 10 zeigt ein Verfahren zum Herstellen einer Regalkonsole 100. In Schritt 151 werden mit einem Metallbearbeitungslaser ein Rohling des Auslegers 106 und zwei Wägevorrichtungen 102, 104 sowie der Verankerungsvorrichtung 108 aus einem Blech ausgeschnitten. In Schritt 152 werden mit einem Biegewerkzeug die Versteifungsrippen 110 des Auslegers 106 und die Stabilisierungselemente 64 der Wägevorrichtungen 102, 104 gebogen. In Schritt 153 werden mit einem Biegewerkzeug die oberen Wiegebleche 26 um 90° nach oben und die unteren Wiegebleche 28 um 90° nach unten gebogen. In Schritt 154 werden auf die oberen Wiegebleche 26 die Dehnungsmessstreifenfolien 68 mit jeweils vier Dehnungsmessstreifen 70 appliziert. In Schritt 155 werden die Dehnungsmessstreifenfolien 68 der beiden Wägevorrichtungen 102, 104 mit zugehörigen Leiterplatten 42 mit darauf angeordneter Elektronik, insbesondere eines Analog-Digital-Wandlers zur Verarbeitung wenigstens eines Ausgangssignals der Dehnungsmessstreifenfolie 68 der Wägevorrichtungen 102, 104, verbunden.

Fig. 11 zeigt einen Regalfachboden 200 ausgeführt als Gitterfachboden. Der Regalfachboden 200 umfasst eine starre Gitterstruktur 202, auf die Gegenstände in dem Regal aufgelegt werden können. Die Gitterstruktur 202 wird durch mindestens zwei Streben 206 getragen, die quer entlang des Regalfachbodens 200 verlaufen und sich im vorderen und hinteren Bereich des Regalfachbodens 200 befinden. Die Streben 206 weisen an ihren Enden jeweils eine Ausnehmung 208 auf, mit der die Streben 206 mit den Aufnahmeelementen 66 und deren Aufnahmen 32 zusammenwirken können. So kann der Regalfachboden mit den Ausnehmungen 208 in die Aufnahmen 32 eingeschoben werden und die Aufnahmeelemente 66 tragen den Regalfachboden momentenfrei.

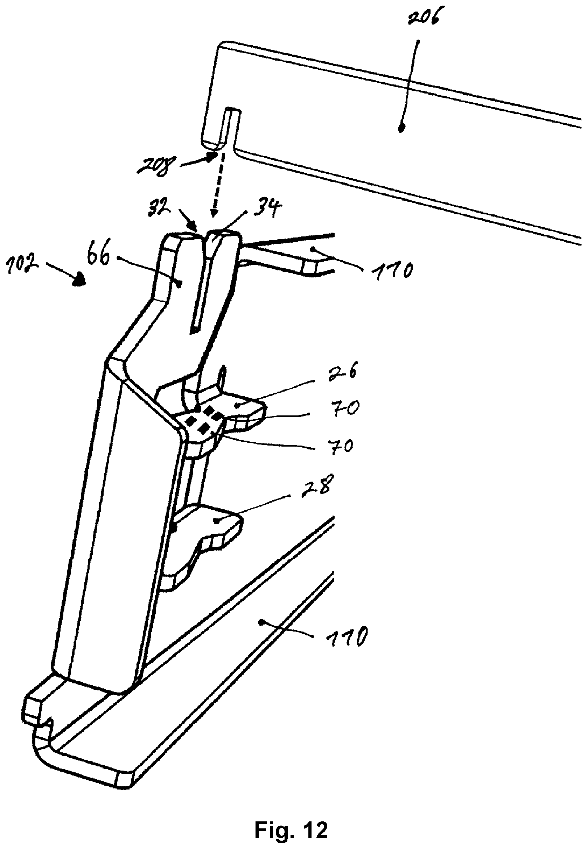

Fig. 12 zeigt dieses Zusammenwirken der Ausnehmung 208 der Strebe 206 und der Aufnahme 32 des Aufnahmeelements 66. Die Schrägen 34 an der Aufnahme 32 vereinfachen das Einschieben der Strebe 206 in die Aufnahme 32.

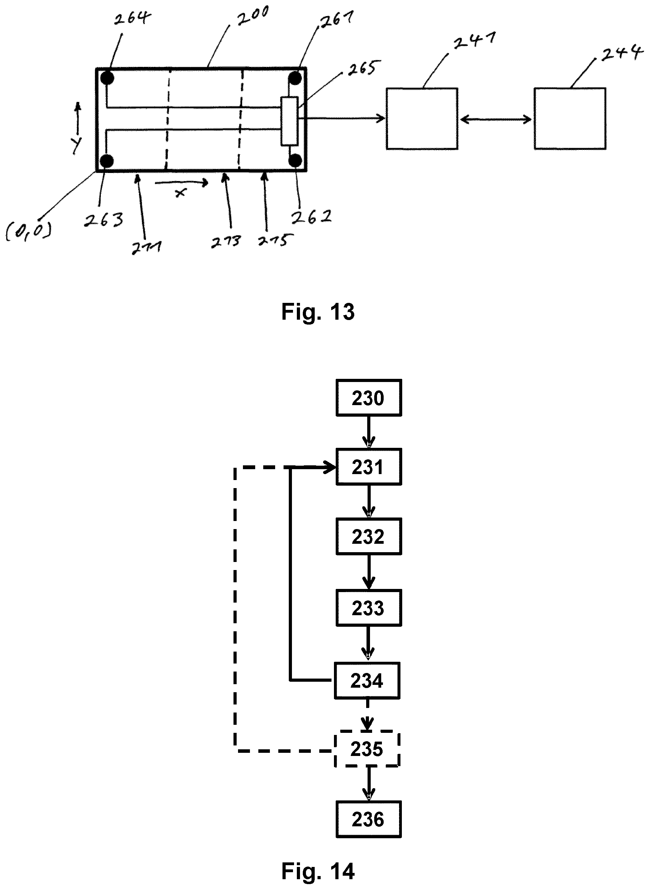

Fig. 13 zeigt schematisch drei Regalbereiche 211, 213, 215 auf einem Regalfachboden 200 und entsprechende Komponenten zur Bestandsüberwachung. Die Bestimmung des Regalbereichs 211, 213, 215 aus dem ein Produkt auf dem Regalfachboden 200 entnommen oder zugefügt wurde, erfolgt mittels Schwerpunktermittlung des Regalfachbodens 200.

Der Regalfachboden 200 wird von den vier Wägevorrichtungen 261, 262, 263, 264 schwebend gehaltert. Dabei handelt es sich um die Wägevorrichtungen 102, 104, die in die Regalkonsolen 100 integriert sind. Dabei stützen eine Regalkonsole 100 links des Regalfachbodens 200 und eine Regalkonsole 100 rechts des Regalfachbodens 200 den Regalfachboden 200. Die Wägevorrichtungen 261, 262, 263, 264 stützen mit ihren Krafteinleitungsabschnitten 24 den Regalfachboden 200 an den Enden seiner Streben 206. Die Wägevorrichtungen 261, 262, 263, 264 bestimmen unabhängig voneinander eine wirkende Gewichtskraft, die durch den Regalfachboden 200 und der in den Regalbereichen 211, 213, 215 abgelegten Produkte entsteht. Dabei wirkt auf jede Wägevorrichtungen 261, 262, 263, 264 anteilig von dem Gesamtgewicht eine einzelne Gewichtskraft. Die Daten aus den Wägevorrichtungen 261, 262, 263, 264 werden an eine Auswerteinheit 265 übermittelt. Die Auswerteeinheit bestimmt aus den einzelnen Gewichtsdaten der Wägevorrichtungen 261, 262, 263, 264 Schwerpunktkoordinaten des Regalfachbodens 200. Die Koordinaten im Regalbereich 211, 213, 215 beginnen in einer Ecke bei der Wägevorrichtung 263 mit den Koordinaten (0, 0) und erstrecken sich in waagrechter Richtung X und in senkrechter Richtung Y.

Zur Veranschaulichung der Schwerpunktsermittlung werden den Wägevorrichtungen 261, 262, 263, 264 wie in Fig. 13 dargestellt die entsprechenden Gewichtsdaten W261, W262, W263, W264 zugewiesen.

Die Bildung des Schwerpunkts in X Richtung bestimmt sich wie folgt:

$$(W261 + W262) / (W261 + W262 + W263 + W264)$$

Die Bildung des Schwerpunkts in Y Richtung bestimmt sich wie folgt:

$$(W261 + W264) / (W261 + W262 + W263 + W264)$$

Mit einem entsprechenden Normierungsfaktor, der die Größe des Regalfachbodens 200 berücksichtigt, sind Koordinaten in dem Regalbereich 211, 213, 215 bestimmbar, die den Schwerpunktkoordinaten des Regalfachbodens 200 entsprechen. Diese Koordinaten werden in der Auswerteeinheit 265 auf Basis der Daten der Wägevorrichtungen 261, 262, 263, 264 ermittelt. Des Weiteren bildet die Auswerteeinheit 265 ein Gesamtgewicht W261 + W262 + W263 + W264. Die Schwerpunktkoordinaten und das Gesamtgewicht werden von der Auswerteeinheit 265 an eine Steuereinrichtung 241 übermittelt. Das Regal umfasst einen Speicher 244, in dem eine Zuordnung zwischen Schwerpunktkoordinaten und Regalbereichen 211, 213, 215 abgelegt ist. Im Speicher 244 ist des Weiteren für jeden Regalbereich 211, 213, 215 das durchschnittliche Gewicht eines Stücks einer Ware in diesem Regalbereich 211, 213, 215 abgelegt. Im Speicher 244 ist für jeden Regalbereich 211, 213, 215 der aktuelle Warenbestand, das heißt die aktuelle Anzahl von Waren/Stück in diesem Regalbereich 211, 213, 215 gespeichert. Mit dieser Anordnung sind neben den in Fig. 13 gezeigten Regalbereichen 211, 213, 215, die nebeneinander in X Richtung angeordnet sind, auch Regalbereiche zu ermitteln, die in X und Y Richtung in Reihen und Spalten, also in einer Matrix, angeordnet sind.

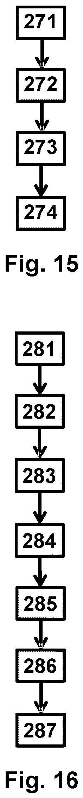

Fig. 14 zeigt ein Verfahren zur Bestandsüberwachung in einem Regal, das durch eine Steuereinrichtung 241 ausgeführt wird. In Schritt 230 werden die Regalbereiche 211, 213, 215 des Regalfachbodens 200 mit Waren bestückt. Dabei wird im Speicher 244 jedem Regalbereich 211, 213, 215 die Ware zugewiesen und ein Gewicht pro Stück abgespeichert. Dabei handelt es sich um das durchschnittliche Gewicht pro Stück, da das Gewicht zum Beispiel von Backwaren leicht voneinander abweichen kann. Die Abweichungen befinden sich jedoch in einem Bereich und sind statistisch so verteilt, dass sie für das Verfahren keine Rolle spielen. Des Weiteren wird im Speicher 244 für jeden Regalbereich 211, 213, 215 die Anzahl von Waren abgelegt, die sich nach dem Befüllen des Regals auf dem Regalfachboden 200 befinden. Des Weiteren sind im Speicher 244 die X und Y Koordinaten jedes Regalbereichs 211, 213, 215 hinterlegt. Diese müssen nicht bei jedem Befüllen neu hinterlegt werden, da sie sich nicht ändern. Wird jedoch die Größe der Regalbereiche 211, 213, 215 und deren Anordnung durch eine Neuanordnung der Zwischenwände geändert, so muss im Speicher 244 die Zuordnung zwischen X und Y Koordinaten und Regalbereichen 211, 213, 215 aktualisiert werden. Somit ist im Speicher 244 hinterlegt, über welche X und Y Koordinaten sich jeder Regalbereich 211, 213, 215 erstreckt. Des Weiteren ist im Speicher 244 ein Grenzwert für jeden Regalbereich 211, 213, 215 hinterlegt, bei dessen Unterschreitung das Regal eine Nachricht ausgeben soll, dass neue Waren in diesem Regalbereich 211, 213, 215 aufgefüllt werden müssen. In Schritt 231 wird mittels einer Auswerteeinheit 265 aus den Gewichtswerten der Wägevorrichtungen 261, 262, 263, 264 ein Ort bestimmt, an dem eine Ware oder Waren entnommen oder zugefügt wurden und das Gesamtgewicht der entnommenen oder zugefügten Waren. Die Bestimmung in Schritt 231 kann mit drei alternativen Verfahren ausgeführt werden, die mit Bezug zu Fig. 15 bis Fig. 17 im Folgenden beschrieben sind. In Schritt 232 wird mit der Steuereinrichtung 241 aufgrund der Koordinaten des Orts, an dem etwas entnommen oder zugefügt wurde und mithilfe der Information aus dem Speicher 244 über die Anordnung der Regalbereiche 211, 213, 215 der zugehörige Regalbereich 211, 213, 215 bestimmt. In Schritt 233 wird aus dem bestimmten Gesamtgewicht der entnommenen Waren und dem im Speicher 244 dem Regalbereich 211, 213, 215 zugeordneten Gewichtswert für eine Ware die Anzahl Waren bestimmt, die aus dem Regalbereich 211, 213, 215 entnommen oder zugefügt wurden. Es wird also die Stückzahl der entnommenen Gegenstände bestimmt. In Schritt 234 wird der dem Regalbereich 211, 213, 215 zugeordnete aktuelle Warenbestand um die Anzahl der entnommenen Waren reduziert, ggf. erhöht. Das Verfahren wird dann mit Schritt 231 mit der Entnahme oder dem Zufügen einer weiteren Ware fortgesetzt. Ist ein im Speicher 244 hinterlegter Grenzwert für den Warenbestand in einem Regalbereich 211, 213, 215 unterschritten, so schickt das Verfahren in Schritt 235 eine Nachricht an einen Bediener, so dass dieser informiert ist, dass der Warenbestand ein niedriges Niveau erreicht hat und aufgefüllt werden muss. In Schritt 236 werden durch den Bediener neue Informationen zum Warenbestand eingegeben, wenn er einen Regalbereich 211, 213, 215 mit neuen Waren befüllt hat. Die Informationen im Speicher 244 zum Warenbestand in diesem Regalbereich 211, 213, 215 werden dann entsprechend, durch die Bedienereingabe veranlasst, aktualisiert.

Fig. 15 zeigt schematisch ein erstes Verfahren zur Bestimmung eines Ortes auf dem Regalfachboden 200, an dem eine Ware hinzugefügt oder entnommen wurde. In Schritt 271 werden alle Wägevorrichtungen 261, 262, 263, 264 tariert, das heißt der Regalfachboden 200 und alle darauf aufgebrachten Waren werden so behandelt, als wären sie eine Vorlast für die Wägevorrichtungen 261, 262, 263, 264 und auf Null gesetzt. In Schritt 272 wird von zumindest einer Wägevorrichtung 261, 262, 263, 264 ein neuer Gewichtswert gemessen und von der Auswerteeinrichtung 265 empfangen. In Schritt 273 berechnet die Auswerteeinrichtung 265 aufgrund der aktuellen Gewichtsdaten der Wägevorrichtungen 261, 262, 263, 264 Schwerpunktkoordinaten. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem eine Ware aus dem Regalfachboden 200 entnommen oder zugefügt wurde. In Schritt 274 wird dieser Ort und die Änderung des Gewichts an die Steuereinrichtung 241 weitergegeben.

Fig. 16 zeigt schematisch ein zweites Verfahren zur Bestimmung eines Ortes auf dem Regalfachboden 200, an dem eine Ware hinzugefügt oder entnommen wurde. In Schritt 281 werden Schwerpunktkoordinaten vom aktuellen Schwerpunkt des Regalfachbodens 200 inklusiver aller Waren die darauf aufgelegt sind ermittelt. Dabei handelt es sich um den echten Schwerpunkt. Der Regalfachboden 200 oder zumindest die Waren die darauf aufgelegt sind, sind nicht tariert. In Schritt 282 wird von zumindest einer Wägevorrichtungen 261, 262, 263, 264 ein neuer Gewichtswert gemessen und von der Auswerteeinrichtung 265 empfangen. In Schritt 283 werden neue Schwerpunktkoordinaten von der Auswerteeinrichtung 265 aus den neuen Daten der Wägevorrichtungen 261, 262, 263, 264 bestimmt. In Schritt 284 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 285 der Vektor mit Hilfe des Gesamtgewichts des Regalfachbodens und der Änderung des Gesamtgewichts skaliert. Der Ort, an dem ein Produkt aus dem Regalfachboden 200 entnommen wurde oder darauf abgelegt wurde ergibt sich in Schritt 286, indem zu den vorhergehenden Schwerpunktkoordinaten der skalierte Vektor addiert wird. In Schritt 287 wird dieser Ort und die Änderung des Gewichts an die an die Steuereinrichtung 241 weitergegeben.

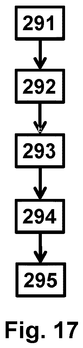

Fig. 17 zeigt schematisch ein drittes Verfahren zur Bestimmung eines Ortes auf dem Regalfachboden 200, an dem eine Ware hinzugefügt oder entnommen wurde. In Schritt 291 wir durch alle Wägevorrichtungen 261, 262, 263, 264 jeweils ein Gewichtswert bestimmt, der vorhergehende Gewichtswert. In Schritt 292 wird von zumindest einer Wägevorrichtung 261, 262, 263, 264 ein neuer Gewichtswert gemessen und von der Auswerteeinrichtung 265 empfangen. In Schritt 293 berechnet die Auswerteeinheit 265 für jede Wägevorrichtung 261, 262, 263, 264 separat die Änderung des Gewichtswert, das heißt, die Auswerteeinheit bildet die Differenz aus dem neuen Gewichtswert und dem vorhergehenden Gewichtswert. In Schritt 294 berechnet die Auswerteeinrichtung 265 die Schwerpunktkoordinaten der Differenzwerte der vier Wägevorrichtung 261, 262, 263, 264. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem eine Ware aus dem Regalfachboden 200 entnommen oder zugefügt wurde. In Schritt 295 wird dieser Ort und die Änderung des Gewichts an die Steuereinrichtung 241 weitergegeben.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Regalkonsole mit mindestens einer Wägevorrichtung (102, 104), geeignet zum befestigt werden in einer vertikal angeordneten Regalschiene, mit einer Verankerungsvorrichtung (108) und einem Ausleger (106) zum Tragen eines Regalfachbodens (200), wobei im Zustand, in dem die Regalkonsole (100) in einer Regalschiene befestigt ist, der Ausleger (106) in einer im Wesentlichen horizontalen Richtung von der Regalschiene absteht und insbesondere durch ein vertikal angeordnetes Blech gebildet ist, wobei in einem kartesischen Koordinatensystem die Ausdehnung des Auslegers (106) in der horizontalen Ebene eine Y-Richtung definiert, die vertikale Richtung eine Z-Richtung definiert und die senkrecht zur Y-Richtung und Z-Richtung stehende Richtung eine X-Richtung definiert, wobei die mindestens eine Wägevorrichtung einen Krafteinleitungsabschnitt (24), einen Gelenkabschnitt (22) und einen Kraftaufnahmeabschnitt (20) aufweist, und dass der Gelenkabschnitt (22) aus zwei horizontal und parallel zueinander verlaufenden Wiegeblechen (26, 28) besteht, **dadurch gekennzeichnet, dass** der Kraftaufnahmeabschnitt (20) und der Krafteinleitungsabschnitt (24) zumindest teilweise aus vertikal verlaufenden Blechen (51, 52, 53, 61, 62, 63) bestehen, und dass die Breite der Wiegebleche (26, 28) in X-Richtung im Bereich der Mitte des Gelenkabschnitts (22) am schmalsten ist und in Richtung zum Krafteinleitungsabschnitt (24) und zum Kraftaufnahmeabschnitt (20) zunimmt, und dass die Dicke des oberen Wiegeblechs (26) und die Dicke des untern Wiegeblechs (28) in Z-Richtung gleich ist.

2. Regalkonsole nach Anspruch 1, **dadurch gekennzeichnet, dass** der Kraftaufnahmeabschnitt (20), der Gelenkabschnitt (22) und der Krafteinleitungsabschnitt (24) einstückig ausgebildet sind.

3. Regalkonsole nach Anspruch 1 oder 2, **dadurch gekennzeichnet, dass** das vertikale Blech des Krafteinleitungsabschnitts (24) und/oder des Kraftaufnahmeabschnitts (20) in X-Richtung seitlich neben den Wiegeblechen (26, 28) verläuft.

4. Regalkonsole nach einem der Ansprüche 1 bis 3, **dadurch gekennzeichnet, dass** der Krafteileitungsabschnitt ein Aufnahmeelement (66) für eine Strebe (206) eines Regalfachbodens (200) umfasst, wobei das Aufnahmeelement (66) sich in Z-Richtung über der Position des Gelenkabschnitts (22) befindet und wobei insbesondere das Aufnahmeelement (66) einen von oben in vertikaler Richtung orientierten Einschnitt (32) zum Einführen einer Strebe (206) eines Regalfachbodens (200) aufweist.

5. Regalkonsole nach einem der Ansprüche 1 bis 4, **dadurch gekennzeichnet, dass** der Krafteinleitungsabschnitt (24) ein Stabilisierungselement (64) umfasst, wobei das Stabilisierungselement (64) insbesondere als ein in X-Z-Richtung orientiertes Blech ausgebildet ist.

6. Regalkonsole nach einem der Ansprüche 1 bis 5, **dadurch gekennzeichnet, dass** die Dicke des Bleches des Kraftaufnahmeabschnitts (20), des Gelenkabschnitts (22) und des Krafteinleitungsabschnitts (24) gleich ist und insbesondere, dass das Blech zwischen 1,5 mm und 6 mm, insbesondere zwischen 2 mm und 3 mm dick ist.

7. Regalkonsole nach einem der Ansprüche 1 bis 6, **dadurch gekennzeichnet, dass** die zwei Wiegebleche (26, 28) in Z-Richtung übereinander angeordnet sind und dass oberseitig am oberen Wiegeblech (26) und unterseitig am unteren Wiegeblech (28) jeweils zwei Dehnungsmessstreifen (70) angebracht sind, und wobei die vier Dehnungsmessstreifen (70) der Wägevorrichtung zu einer Wheatstoneschen Messbrücke verschaltet sind, und wobei insbesondere die Verschaltung der zwei oberseitig angeordneten Dehnungsmessstreifen (70) und die zwei oberseitig angeordneten Dehnungsmessstreifen (70) auf einer Dehnungsmessstreifenfolie (68) angebracht sind und wobei insbesondere die Verschaltung der zwei unterseitig angeordneten Dehnungsmessstreifen (70) und die zwei unterseitig angeordneten Dehnungsmessstreifen (70) auf einer Dehnungsmessstreifenfolie (68) angebracht sind.

8. Regalkonsole nach einem der Ansprüche 1 bis 6, **dadurch gekennzeichnet, dass** die zwei Wiegebleche (26, 28) in Z-Richtung übereinander angeordnet sind und dass oberseitig am oberen Wiegeblech (26) vier Dehnungsmessstreifen (70) angebracht sind, von denen jeweils zwei in X-Richtung nebeneinander auf dem oberen Wiegeblech (26) angeordnet sind, und wobei die vier Dehnungsmessstreifen (70) der Wägevorrichtung zu einer Wheatstoneschen Messbrücke verschaltet sind, und wobei insbesondere die Verschaltung der vier Dehnungsmessstreifen (70) und die vier Dehnungsmessstreifen (70) auf einer Dehnungsmessstreifenfolie (68) angebracht sind.

9. Regalkonsole nach einem der Ansprüche 1 bis 8, **dadurch gekennzeichnet, dass** die Kontur der Breite des oberen Wiegeblechs (26) und die Kontur der Breite des unteren Wiegeblechs (28) ähnlich aber nicht exakt gleich sind.

10. Regalkonsole nach einem der Ansprüche 1 bis 9, **dadurch gekennzeichnet, dass** die Wägevorrichtung einen Überlastanschlag umfasst, der durch die Höhe eines Spaltes (40) zwischen Ausleger (106) und Krafteinleitung (24) definiert ist.

11. Regalkonsole nach einem der Ansprüche 1 bis 10, **dadurch gekennzeichnet, dass** Regalkonsole zwei Wägevorrichtungen (102, 104) umfasst und der Ausleger (106) und die beiden Wägevorrichtungen (102, 104) und insbesondere die Verankerungsvorrichtung (108) einstückig ausgebildet sind.

12. Verfahren zur Herstellung einer Regalkonsole nach einem der Ansprüche 1 bis 11, das folgende Schritte umfassend:

   - ausschneiden mit einem Metallbearbeitungslaser eines Rohlings mindestens einer Wägevorrichtung (102, 104) aus einem Blech,
   - biegen des Rohlings mit einem Biegewerkzeug, so dass mindestens ein Stabilisierungselement (64) und insbesondere Versteifungsrippen (110) entstehen,
   - biegen des Rohlings mit einem Biegewerkzeug, so dass ein oberes Wiegeblech (26) und ein unteres Wiegeblechs (28) entstehen,
   - applizieren mindestens einer Dehnungsmessstreifenfolie mit mindestens zwei Dehnungsmessstreifen (70) auf das obere Wiegeblech (26) oder auf das obere Wiegeblech (26) und unter das untere Wiegeblech (28),
   - verbinden der Dehnungsmessstreifenfolie mit mindestens einer Leiterplatte mit darauf angeordneter Elektronik, insbesondere eines Analog-Digital-Wandlers zur Verarbeitung wenigstens eines Ausgangssignals der zumindest einen Dehnungsmessstreifenfolie.

13. Verfahren zur Herstellung einer Wägevorrichtung für eine Regalkonsole nach Anspruch 12, wobei der Schritt des Ausschneidens mit einem Metallbearbeitungslaser eines Rohlings mindestens einer Wägevorrichtung (102, 104) aus einem Blech den Schritt des Ausschneidens eines Rohlings für zwei Wägevorrichtungen und eines Auslegers (106) umfasst.

14. Verfahren zur Herstellung einer Wägevorrichtung für eine Regalkonsole nach Anspruch 12, wobei das Verfahren folgende Schritte umfasst:

- biegen mit einem Biegewerkzeug von Befestigungsseiten an die Versteifungsrippen (110),
- bohren mit einer Bohrvorrichtung von Befestigungslöchern in die Befestigungsseiten und bohren von Befestigungslöchern in einen Ausleger (106) der Regalkonsole, und
- verbinden der Wägevorrichtung (102, 104) mit dem Ausleger (106) einer Regalkonsole mittels der Befestigungslöcher und Schrauben.

15. Regal bestehend aus mindestens zwei vertikal angeordneten Regalschienen und mindestens zwei auf gleicher Höhe in jeweils einer Regalschiene angeordneten Regalkonsolen (100) nach einem der Ansprüche 1 bis 11 und mindestens einem auf den zwei auf gleicher Höhe angeordneten Regalkonsolen (100) aufgelegten Regalfachboden (200), wobei der Regalfachboden (200) zwei parallel ausgebildete Streben (206) umfasst, die mit ihren Enden auf den Krafteinleitungsabschnitten (24) von jeweils zwei Wägevorrichtungen (102, 104) abgestützt sind, und wobei das Regal eine Auswerteeinheit (265) umfasst, die in periodischen Abständen oder bei einer Änderung des Gesamtgewichts, welches von den vier Wägevorrichtungen, auf deren Krafteinleitungsabschnitten (24) der Regalfachboden (200) aufliegt, erfasst wird, aus den Daten der Wägevorrichtungen (261, 262, 263, 264) neue Schwerpunktskoordinaten ermittelt und diese an eine Steuereinheit (241) übermittelt, wobei die Steuereinheit (241) basierend auf Änderungen der Schwerpunktskoordinaten einen Regalbereich (211, 213, 215) ermittelt, wobei die Steuereinheit (41) aus der Änderung des Gesamtgewichts das Gewicht der in dem ermittelten Regalbereich (211, 213, 215) entnommenen oder zugefügten Waren bestimmt und den in einem Speicher (244) gespeicherten Warenbestand für diesen Regalbereich (211, 213, 215) aktualisiert.

16. Regal nach Anspruch 15, **dadurch gekennzeichnet, dass** die Auswerteeinheit (265) bei einer Änderung des Gesamtgewichts einen Vektor zwischen den vorhergehenden Schwerpunktkoordinaten und den neuen Schwerpunktkoordinaten ermittelt, und
dass der von der Steuereinheit (241) bestimmte Regalbereich (211, 213, 215) aus dem Vektor und dem Gesamtgewicht von der Steuereinheit (241) ermittelt wird.

17. Regal nach Anspruch 15, **dadurch gekennzeichnet, dass** die Auswerteeinheit (265) alle Wägevorrichtungen (61, 62, 63, 64) periodisch und gleichzeitig tariert.

18. Regal nach Anspruch 15, **dadurch gekennzeichnet, dass** die Auswerteeinheit (265) zur Ermittlung der neuen Schwerpunktskoordinaten für jede Wägevorrichtung (261, 262, 263, 264) die Differenz aus einem neuen Gewichtswert und einem vorhergehenden Gewichtswert bildet und aus den vier Differenzwerten die neuen Schwerpunktskoordinaten ermittelt.

## Claims

1. Rack support having at least one weighing device (102, 104), which rack support is suitable for being secured in a vertically arranged rack rail and has an anchoring device (108) and an extension arm (106) for supporting a shelf (200), wherein, in the state in which the rack support (100) is secured in a rack rail, the extension arm (106) projects from the rack rail in a substantially horizontal direction and is formed, in particular, by a vertically arranged plate, wherein, in a Cartesian coordinate system, the extent of the extension arm (106) in the horizontal plane defines a Y-direction, the vertical direction defines a Z-direction and the direction perpendicular to the Y-direction and the Z-direction defines an X-direction, wherein the at least one weighing device has a force-introducing section (24), a joint section (22) and a force-absorbing section (20), and that the joint section (22) consists of two weighing plates (26, 28) which run horizontally and parallel to one another, **characterized in that** the force-absorbing section (20) and the force-introducing section (24) consist at least partially of vertically running plates (51, 52, 53, 61, 62, 63), and **in that** the width of the weighing plates (26, 28) in the X direction is narrowest in the region of the middle of the joint section (22) and increases in the direction of the force-introducing section (24) and the force-absorbing section (20), and **in that** the thickness of the upper weighing plate (26) and the thickness of the lower weighing plate (28) in the Z-direction is the same.

2. Rack support according to Claim 1, **characterized in that** the force-absorbing section (20), the joint section (22) and the force-introducing section (24) are formed in one piece.

3. Rack support according to Claim 1 or 2, **characterized in that** the vertical plate of the force-introducing portion (24) and/or of the force-absorbing section (20) runs laterally next to the weighing plates (26, 28) in the X-direction.

4. Rack support according to one of Claims 1 to 3, **characterized in that** the force-introducing section comprises a receiving element (66) for a strut (206) of a shelf (200), wherein the receiving element (66) is located above the position of the joint section (22) in the Z-direction, and wherein in particular the receiving element (66) has an incision (32), oriented in the vertical direction from above, for insertion of a strut (206) of a shelf (200).

5. Rack support according to one of Claims 1 to 4, **characterized in that** the force-introducing section (24) comprises a stabilization element (64), wherein the stabilization element (64) is designed in particular as a plate oriented in the X-Z direction.

6. Rack support according to one of Claims 1 to 5, **characterized in that** the thickness of the plate of the force-absorbing section (20), the joint section (22) and the force-introducing section (24) is the same, and in particular **in that** the plate is between 1.5 mm and 6 mm, in particular between 2 mm and 3 mm, thick.

7. Rack support according to one of Claims 1 to 6, **characterized in that** the two weighing plates (26, 28) are arranged one above the other in the Z-direction, and **in that** in each case two strain gauges (70) are fitted to the top side of the upper weighing plate (26) and to the bottom side of the lower weighing plate (28), and wherein the four strain gauges (70) of the weighing device are interconnected to form a Wheatstone measuring bridge, and wherein in particular the wiring of the two strain gauges (70) arranged on the top side and the two strain gauges (70) arranged on the top side are fitted on a strain gauge film (68), and wherein in particular the wiring of the two strain gauges (70) arranged on the bottom side and the two strain gauges (70) arranged on the bottom side are fitted on a strain gauge film (68).

8. Rack support according to one of Claims 1 to 6, **characterized in that** the two weighing plates (26, 28) are arranged one above the other in the Z-direction, and **in that** four strain gauges (70) are fitted to the top side of the upper weighing plate (26), in each case two of said four strain gauges being arranged next to one another on the upper weighing plate (26) in the X-direction on the upper weighing plate (26), and wherein the four strain gauges (70) of the weighing device are interconnected to form a Wheatstone measuring bridge, and wherein in particular the wiring of the four strain gauges (70) and the four strain gauges (70) are fitted on a strain gauge (68).

9. Rack support according to one of Claims 1 to 8, **characterized in that** the contour of the width of the upper weighing plate (26) and the contour of the width of the lower weighing plate (28) are similar but not exactly the same.

10. Rack support according to one of Claims 1 to 9, **characterized in that** the weighing device comprises an overload stop which is defined by the height of a gap (40) between the extension arm (106) and the force introduction (24).

11. Rack support according to one of Claims 1 to 10, **characterized in that** the rack support comprises two weighing devices (102, 104), and the extension arm (106) and the two weighing devices (102, 104) and in particular the anchoring device (108) are formed in one piece.

12. Method for producing a rack support according to one of Claims 1 to 11, the method comprising the following steps:

- cutting out, using a metal-machining laser, a blank for at least one weighing device (102, 104) from a metal sheet,
- bending the blank using a bending tool, so that at least one stabilization element (64) and in particular reinforcing ribs (110) are created,
- bending the blank using a bending tool, so that an upper weighing plate (26) and a lower weighing plate (28) are created,
- applying at least one strain gauge film having at least two strain gauges (70) onto the upper weighing plate (26) or onto the upper weighing plate (26) and beneath the lower weighing plate (28),
- connecting the strain gauge film to at least one printed circuit board with electronics arranged on it, in particular an analog-digital converter for processing at least one output signal from the at least one strain gauge film.

13. Method for producing a weighing device for a rack support according to Claim 12, wherein the step of cutting out, using a metal-machining laser, a blank for at least one weighing device (102, 104) from a metal sheet comprises the step of cutting out a blank for two weighing devices and an extension arm (106).

14. Method for producing a weighing device for a rack support according to Claim 12, wherein the method comprises the following steps:

- bending, using a bending tool, securing sides onto the reinforcing ribs (110),
- drilling, using a drilling device, fastening holes into the fastening sides and drilling fastening holes into an extension arm (106) of the rack support, and
- connecting the weighing device (102, 104) to the extension arm (106) of a rack support by means of the fastening holes and screws.

15. Rack consisting of at least two vertically arranged rack rails and at least two rack supports (100) according to one of Claims 1 to 11 arranged at the same height in each case of a rack rail and at least one shelf (200) placed on the two rack supports (100) arranged at the same height, wherein the shelf (200) comprises two struts (206) of parallel design, which struts are supported, by way of their ends, on the force-introducing sections (24) of in each case two weighing devices (102, 104), and wherein the rack comprises an evaluation unit (265) which, at periodic intervals or in the event of a change in the total weight which is detected by the four weighing devices on the force-introducing sections (24) of which the shelf (200) rests, determines new centroid coordinates from the data from the weighing devices (261, 262, 263, 264) and transmits these centroid coordinates to a control unit (241), wherein the control unit (241) determines a rack region (211, 213, 215) based on changes in the centroid coordinates, wherein the control unit (41) establishes from the change in the total weight the weight of the goods removed from or added to the determined rack region (211, 213, 215) and updates the inventory, stored in a memory (244), for this rack region (211, 213, 215).

16. Rack according to Claim 15, **characterized in that** the evaluation unit (265), in the event of a change in the total weight, determines a vector between the previous centroid coordinates and the new centroid coordinates, and **in that** the rack region (211, 213, 215) established by the control unit (241) is determined from the vector and the total weight by the control unit (241) .

17. Rack according to Claim 15, **characterized in that** the evaluation unit (265) periodically and simultaneously tares all the weighing devices (61, 62, 63, 64).

18. Rack according to Claim 15, **characterized in that** the evaluation unit (265), for the purpose of determining the new centroid coordinates for each weighing device (261, 262, 263, 264), calculates the difference between a new weight value and a previous weight value and determines the new centroid coordinates from the four difference values.

## Revendications

1. Console d'étagère avec au moins un dispositif de pesage (102, 104), approprié pour être fixé dans un rail d'étagère agencé verticalement, avec un dispositif d'ancrage (108) et un bras (106) pour supporter une tablette d'étagère (200) ; dans l'état dans lequel la console d'étagère (100) est fixée dans un rail d'étagère, le bras (106) faisant saillie dans une direction essentiellement horizontale à partir du rail d'étagère et étant formé notamment par une tôle agencée verticalement ; dans un système de coordonnées cartésiennes, l'extension du bras (106) dans le plan horizontal définissant une direction Y, la direction verticale définissant une direction Z et la direction perpendiculaire à la direction Y et à la direction Z définissant une direction X, l'au moins un dispositif de pesage présentant une section d'introduction de force (24), une section d'articulation (22) et une section de réception de force (20), et en ce que la section d'articulation (22) est constituée de deux tôles de pesage (26, 28) s'étendant horizontalement et parallèlement l'une à l'autre, **caractérisée en ce que** la section de réception de force (20) et la section d'introduction de force (24) sont constituées au moins partiellement de tôles s'étendant verticalement (51, 52, 53, 61, 62, 63), et **en ce que** la largeur des tôles de pesage (26, 28) est la plus étroite dans la direction X dans la zone du centre de la section d'articulation (22) et augmente en direction de la section d'introduction de force (24) et de la section de réception de force (20), et **en ce que** l'épaisseur de la tôle de pesage supérieure (26) et l'épaisseur de la tôle de pesage inférieure (28) sont identiques dans la direction Z.

2. Console d'étagère selon la revendication 1, **caractérisée en ce que** la section de réception de force (20), la section d'articulation (22) et la section d'introduction de force (24) sont réalisées d'un seul tenant.

3. Console d'étagère selon la revendication 1 ou 2, **caractérisée en ce que** la tôle verticale de la section d'introduction de force (24) et/ou de la section de réception de force (20) s'étend latéralement à côté des tôles de pesage (26, 28) dans la direction X.

4. Console d'étagère selon l'une quelconque des revendications 1 à 3, **caractérisée en ce que** la section d'introduction de force comprend un élément de réception (66) pour une entretoise (206) d'une tablette d'étagère (200), l'élément de réception (66) se trouvant dans la direction Z au-dessus de la position de la section d'articulation (22) et, notamment, l'élément de réception (66) présentant une incision (32) orientée dans la direction verticale à partir du haut pour introduire une entretoise (206) d'une tablette d'étagère (200).

5. Console d'étagère selon l'une quelconque des revendications 1 à 4, **caractérisée en ce que** la section d'introduction de force (24) comprend un élément de stabilisation (64), l'élément de stabilisation (64) étant notamment réalisé sous la forme d'une tôle orientée dans la direction X-Z.

6. Console d'étagère selon l'une quelconque des revendications 1 à 5, **caractérisée en ce que** l'épaisseur de la tôle de la section de réception de force (20), de la section d'articulation (22) et de la section d'introduction de force (24) est identique, et notamment **en ce que** la tôle a une épaisseur comprise entre 1,5 mm et 6 mm, notamment entre 2 mm et 3 mm.

7. Console d'étagère selon l'une quelconque des revendications 1 à 6, **caractérisée en ce que** les deux tôles de pesage (26, 28) sont agencées l'une au-dessus de l'autre dans la direction Z et **en ce que** deux jauges extensométriques (70) sont disposées respectivement sur le côté supérieur de la tôle de pesage supérieure (26) et sur le côté inférieur de la tôle de pesage inférieure (28), et les quatre jauges extensométriques (70) du dispositif de pesage étant connectées en un pont de mesure de Wheatstone, et, notamment, la connexion des deux jauges extensométriques (70) agencées sur le côté supérieur et les deux jauges extensométriques (70) agencées sur le côté supérieur étant disposées sur une feuille de jauge extensométrique (68) et, notamment, la connexion des deux jauges extensométriques (70) agencées sur le côté inférieur et les deux jauges extensométrique (70) agencées sur le côté inférieure étant disposées sur une feuille de jauge extensométrique (68).

8. Console d'étagère selon l'une quelconque des revendications 1 à 6, **caractérisée en ce que** les deux tôles de pesage (26, 28) sont agencées l'une au-dessus de l'autre dans la direction Z et **en ce que** quatre jauges extensométriques (70) sont disposées sur le côté supérieur de la tôle de pesage supérieure (26), dont deux sont agencées l'une à côté de l'autre dans la direction X sur la tôle de pesage supérieure (26), et les quatre jauges extensométriques (70) du dispositif de pesage étant connectées en un pont de mesure de Wheatstone, et, notamment, la connexion des quatre jauges extensométriques (70) et les quatre jauges extensométriques (70) étant disposées sur une feuille de jauge extensométrique (68).

9. Console d'étagère selon l'une quelconque des revendications 1 à 8, **caractérisée en ce que** le contour de la largeur de la tôle de pesage supérieure (26) et le contour de la largeur de la tôle de pesage inférieure (28) sont similaires mais pas exactement identiques.

10. Console d'étagère selon l'une quelconque des revendications 1 à 9, **caractérisée en ce que** le dispositif de pesage comprend une butée de surcharge qui est définie par la hauteur d'un espace (40) entre le bras (106) et l'introduction de force (24).

11. Console d'étagère selon l'une quelconque des revendications 1 à 10, **caractérisée en ce que** la console d'étagère comprend deux dispositifs de pesage (102, 104) et le bras (106) et les deux dispositifs de pesage (102, 104) et notamment le dispositif d'ancrage (108) sont réalisés d'un seul tenant.

12. Procédé de fabrication d'une console d'étagère selon l'une quelconque des revendications 1 à 11, comprenant les étapes suivantes :

> - la découpe avec un laser d'usinage des métaux d'une ébauche d'au moins un dispositif de pesage (102, 104) dans une tôle,
> - le pliage de l'ébauche avec un outil de pliage de manière à obtenir au moins un élément de stabilisation (64) et notamment des nervures de renforcement (110),
> - le pliage de l'ébauche avec un outil de pliage de manière à obtenir une tôle de pesage supérieure (26) et une tôle de pesage inférieure (28),
> - l'application d'au moins une feuille de jauge extensométrique avec au moins deux jauges extensométriques (70) sur la tôle de pesage supérieure (26) ou sur la tôle de pesage supérieure (26) et sous la tôle de pesage inférieure (28),
> - la liaison de la feuille de jauge extensométrique à au moins une carte de circuit imprimé sur laquelle est agencée une électronique, notamment un convertisseur analogique-numérique pour traiter au moins un signal de sortie de l'au moins une feuille de jauge extensométrique.

13. Procédé de fabrication d'un dispositif de pesage pour une console d'étagère selon la revendication 12, l'étape de découpe avec un laser d'usinage des métaux d'une ébauche d'au moins un dispositif de pesage (102, 104) dans une tôle comprenant l'étape de découpe d'une ébauche pour deux dispositifs de pesage et d'un bras (106) .

14. Procédé de fabrication d'un dispositif de pesage pour une console d'étagère selon la revendication 12, le procédé comprenant les étapes suivantes :

- le pliage avec un outil de pliage de côtés de fixation aux nervures de renforcement (110),
- le forage avec un dispositif de forage de trous de fixation dans les côtés de fixation et le forage de trous de fixation dans un bras (106) de la console d'étagère, et
- la liaison du dispositif de pesage (102, 104) au bras (106) d'une console d'étagère au moyen des trous de fixation et de vis.

15. Étagère constituée d'au moins deux rails d'étagère agencés verticalement et d'au moins deux consoles d'étagère (100) selon l'une quelconque des revendications 1 à 11 agencées à la même hauteur dans un rail d'étagère respectif et d'au moins une tablette d'étagère (200) posée sur les deux consoles d'étagère (100) agencées à la même hauteur, la tablette d'étagère (200) comprenant deux entretoises (206) réalisées parallèlement qui sont appuyées par leurs extrémités sur les sections d'introduction de force (24) de deux dispositifs de pesage (102, 104) respectifs, et l'étagère comprenant une unité d'évaluation (265) qui détermine à des intervalles périodiques ou lors d'une modification du poids total, qui est détecté par les quatre dispositifs de pesage, sur les sections d'introduction de force (24) desquels repose la tablette d'étagère (200), de nouvelles coordonnées de centre de gravité à partir des données des dispositifs de pesage (261, 262, 263, 264) et transmet celles-ci à une unité de commande (241), l'unité de commande (241) déterminant une zone d'étagère (211, 213, 215) sur la base de modifications des coordonnées de centre de gravité, l'unité de commande (41) déterminant, à partir de la modification du poids total, le poids des marchandises prélevées ou ajoutées dans la zone d'étagère déterminée (211, 213, 215) et mettant à jour le stock de marchandises stocké dans une mémoire (244) pour cette zone d'étagère (211, 213, 215).

16. Étagère selon la revendication 15, **caractérisée en ce que,** lors d'une modification du poids total, l'unité d'évaluation (265) détermine un vecteur entre les coordonnées de centre de gravité précédentes et les nouvelles coordonnées de centre de gravité, et **en ce que** la zone d'étagère (211, 213, 215) déterminée par l'unité de commande (241) est déterminée par l'unité de commande (241) à partir du vecteur et du poids total.

17. Étagère selon la revendication 15, **caractérisée en ce que** l'unité d'évaluation (265) tare périodiquement et simultanément tous les dispositifs de pesage (61, 62, 63, 64) .

18. Étagère selon la revendication 15, **caractérisée en ce que** l'unité d'évaluation (265), pour déterminer les nouvelles coordonnées de centre de gravité pour chaque dispositif de pesage (261, 262, 263, 264), forme la différence entre une nouvelle valeur de poids et une valeur de poids précédente et détermine les nouvelles coordonnées de centre de gravité à partir des quatre valeurs de différence.

**Fig. 1**

**Fig. 2**

**Fig. 3**

**Fig. 4**

**Fig. 5**

**Fig. 6**

**Fig. 7**

Fig. 8

Fig. 9

**Fig. 10**

**Fig. 11**

**Fig. 12**

264  200  267

265

247  244

Y

x

(0,0)  263

271  273  275  262

**Fig. 13**

230

231

232

233

234

235

236

**Fig. 14**

271

272

273

274

Fig. 15

281

282

283

284

285

286

287

Fig. 16

```
┌─────┐
│ 291 │
└─────┘
   │
   ▼
┌─────┐
│ 292 │
└─────┘
   │
   ▼
┌─────┐
│ 293 │
└─────┘
   │
   ▼
┌─────┐
│ 294 │
└─────┘
   │
   ▼
┌─────┐
│ 295 │
└─────┘
```

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1319173 B1
- WO 2019220400 A1
- US 10121121 B1
- CN 110169685 A